# EUROPÄISCHE PATENTANMELDUNG

(11) **EP 2 657 548 A2**
(43) Veröffentlichungstag der Anmeldung: **30.10.2013**
(21) Anmeldenummer: 13157193.7
(22) Anmeldetag: 28.02.2013
(51) Int. Cl.: F16B 31/02, F16B 35/04

(54) **Abreißschraube**

(30) Priorität: 26.04.2012 DE 102012103672
(71) Anmelder: Arcus Elektrotechnik Alois Schiffmann GmbH, 81673 München (DE)
(72) Erfinder: Lasinger, Fritz, 85604 Zorneding (DE); Niklis, Christian, 82065 Baierbrunn (DE)
(74) Vertreter: Kindermann, Peter

(57) **Zusammenfassung**

Die Erfindung betrifft eine Abreißschraube mit einem Kontaktelement (1) und einem auf das Kontaktelement (1) aufschraubbaren Betätigungselement (2), wobei das Kontaktelement (1) ein erstes Außengewinde (11) zum Aufschrauben des Betätigungselements (2), ein zweites Außengewinde (12) zum Einschrauben in einen Klemmkörper (3), und zumindest ein Abscherelement (13) aufweist, das zwischen dem ersten und zweiten Außengewinde (11, 12) quer zur Achsrichtung an der Außenwand des Kontaktelements (1) angeordnet ist.

## Beschreibung

Die vorliegende Erfindung bezieht sich auf eine Abreißschraube und insbesondere auf eine aus zwei Elementen bestehende Abreißschraube mit einem Kontaktelement und einem auf das Kontaktelement aufschraubbaren Betätigungselement, wie sie in der Energietechnik als Befestigungsschraube zur Kontaktierung von elektrischen Leitern Verwendung findet.

Derartige Abreißschrauben werden beispielsweise in der Starkstromtechnik zum Verbinden der elektrischen Leiter zweier Starkstromkabel verwendet. Dabei ist es wichtig, dass die Leiterenden mit einem vorgegebenen Anpressdruck kontaktiert werden, um eine einwandfreie mechanische und elektrische Verbindung zu gewährleisten.

Für derartige Zwecke sind Abreißschrauben besonders geeignet. Durch das Abreißen der Schraube wird nämlich ohne Zuhilfenahme von speziellen Werkzeugen wie beispielsweise einem Drehmomentschlüssel zuverlässig sichergestellt, dass die Schraube mit einem vorgegebenen Drehmoment angezogen wird und den geeigneten Mindestkontaktdruck erzeugt. Andererseits wird ferner zuverlässig verhindert, dass eine derartige Kontaktschraube zu stark angezogen wird und möglicherweise das Leiterende eines elektrischen Leiters beschädigt.

In diesem Zusammenhang ist auch zu berücksichtigen, dass die moderne Muffentechnik zum Teil von Schraubverbindern verlangt, dass nach der Montage der entsprechenden Kontaktschrauben kein oder nur ein sehr geringer Schraubenüberstand außerhalb des Schraubverbinders vorhanden ist.

Herkömmliche Abreißschrauben sind üblicherweise so ausgebildet, dass ein Schraubenschaft eine Vielzahl von Sollbruchstellen aufweist, um entsprechende Scherebenen vorzugeben.

Derartige Abreißschrauben haben jedoch aufgrund der Vielzahl von Sollbruchstellen eine eventuell geringe Tragfähigkeit und weisen unter Umständen nach dem Abscheren einen gewissen Schraubenüberstand auf.

Der Erfindung liegt daher die Aufgabe zugrunde, eine Abreißschraube zu schaffen, welche eine hohe Tragfähigkeit aufweist und welche nach dem Abreissen keinen Schraubenüberstand aufweist.

Erfindungsgemäß wird diese Aufgabe durch die Merkmale des Patentanspruchs 1 gelöst.

Vorzugsweise weist die Abreißschraube ein Kontaktelement und ein auf das Kontaktelement aufschraubbares Betätigungselement auf, wobei das Kontaktelement ein erstes Außengewinde zum Aufschrauben des Betätigungselements, ein zweites Außengewinde zum Einschrauben in einen Klemmkörper, und zumindest ein Abscherelement aufweist, das zwischen dem ersten und dem zweiten Außengewinde quer zur Achsrichtung an der Außenwand des Kontaktelements angeordnet ist. Erfindungsgemäß kann dadurch zuverlässig verhindert werden, dass nach dem Abreissen der Schraube ein Schraubenüberstand aus dem Klemmkörper vorliegt.

Beispielsweise kann das zumindest eine Abscherelement einen kreisförmig umlaufenden Abscherring darstellen, der zum einen einen vorbestimmten Anpressdruck definiert und zum anderen einen Schutz für den Klemmkörper vor dem aufgeschraubten Betätigungselement bewirkt.

Vorzugsweise kann zwischen dem zumindest einen Abscherelement und dem ersten Außengewinde eine Ringnut in der Außenwand des Kontaktelements angeordnet sein, wodurch ein Anpressdruck und ein definiertes Abscheren des Abscherelements zuverlässig ermöglicht werden.

Erfindungsgemäß kann das erste Außengewinde einen Kerndurchmesser aufweisen, der größer als der Nenndurchmesser des zweiten Außengewindes ist. Hierdurch kann eine unerwünschte Berührung des zweiten Außengewindes beim Aufschrauben des Betätigungselements zuverlässig verhindert werden.

Vorzugsweise werden für das Betätigungselement standardisierte Schraubenmuttern verwendet. Dadurch lassen sich die Herstellungskosten weiter wesentlich verringern.

Erfindungsgemäß kann das Kontaktelement einen Hohlraum aufweisen, der beispielsweise durch eine Bohrung und insbesondere durch eine Sacklochbohrung ausgebildet ist. Auf diese Weise können die für das Abreißen der Schraube benötigten Kräfte bzw. Drehmomente verringert und exakt eingestellt werden.

Hierbei kann das Kontaktelement vorzugsweise im Bereich des ersten Außengewindes eine erste Wanddicke aufweisen, die größer als eine zweite Wanddicke im Bereich des zweiten Außengewindes ist. Dadurch kann die Tragfähigkeit der Schraube im Bereich des ersten Außengewindes erhöht werden, während gleichzeitig eine Kraft bzw. ein Drehmoment für das Abreißen der Schraube im Bereich des zweiten Außengewindes verringert ist.

Ferner kann der Hohlraum der Schraube eine Rauheit mit einer Rautiefe R_{z}≥0,2 mm aufweisen und der Hohlraum beispielsweise mit einem Füllmaterial aufgefüllt werden, dessen Zugfestigkeit um mindestens das Zehnfache kleiner ist als eine Zugfestigkeit des Materials für das Kontaktelement. Bei geeigneter Auswahl des Materials für das Füllmaterial können dadurch die an der Abrisskante vorliegenden elektrischen Felder in vorteilhafter Weise gesteuert werden, ohne dass hierbei die Abreißeigenschaften der Schraube wesentlich verändert sind.

In den weiteren Unteransprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:
Figur 1 eine vereinfachte Schnittansicht einer Abreißschraube gemäß eines ersten Ausführungsbeispiels;
Figuren 2A bis 2D vereinfachte Schnittansichten zur Veranschaulichung der Wirkungsweise einer Abreißschraube gemäß eines zweiten Ausführungsbeispiels bei ihrer Betätigung; und
Figur 3 eine vereinfachte Schnittansicht einer Abreißschraube gemäß eines dritten Ausführungsbeispiels.

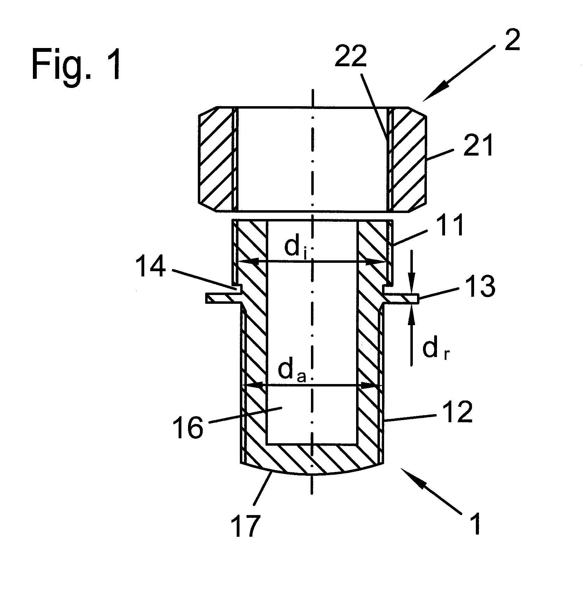

Die Darstellung gemäß Figur 1 zeigt eine vereinfachte Schnittansicht einer Abreißschraube gemäß einem ersten Ausführungsbeispiel. Die Abreißschraube kann hierbei aus zwei Elementen, nämlich einem Kontaktelement 1 zum Verklemmen und Kontaktieren eines elektrischen Leiters in einem Klemmkörper (nicht dargestellt) und einem Betätigungselement 2, das auf das Kontaktelement 1 aufschraubbar ist, bestehen.

Gemäß Figur 1 kann das Kontaktelement 1 aus einem zylinderförmigen Körper bestehen, der an seinem vorderen Ende eine Schraubenkuppe 17 zum Kontaktieren und Verklemmen eines (nicht dargestellten) elektrischen Leiters bzw. Kabels aufweist. An seinem hinteren Ende kann das Kontaktelement 1 ein erstes Außengewinde 11 aufweisen, auf das das Betätigungselement 2 aufgeschraubt werden kann.

Das Betätigungselement 2 kann beispielsweise eine Werkzeugangriffsfläche 21 für ein Antriebswerkzeug aufweisen, wobei vorzugsweise ein Außensechskant realisiert ist. Vorzugsweise kann das Betätigungselement 2 eine standardisierte Schraubenmutter darstellen, welche beispielsweise nach DIN Normen standardisiert sind. Derartige standardisierte Schraubenmuttern können beispielsweise Vierkantmuttern oder Sechskantmuttern aufweisen. Aufgrund der Verwendung von standardisierten Schraubenmuttern für das Betätigungselement 2 können die Herstellungskosten für die erfindungsgemäße Abreißschraube wesentlich verringert werden.

Ein Innengewinde 22 des Betätigungselements 2 korrespondiert hierbei mit dem ersten Außengewinde 11 des Kontaktelements 1, wodurch ein Aufschrauben des Betätigungselements 2 auf das Kontaktelement 1 ermöglicht ist. Obwohl vorzugsweise ein herkömmliches Gewinde für das Innengewinde 22 und das erste Außengewinde 11 verwendet wird, können auch Spezialgewinde zum Einsatz kommen.

Das Kontaktelement 1 weist ferner ein zweites Außengewinde 12 auf, welches sich vom vorderen Ende bzw. von der Schraubenkuppe 17 in Richtung zum ersten Außengewinde 11 erstreckt und von diesem beabstandet ist. Zwischen dem ersten Außengewinde 11 und dem zweiten Außengewinde 12 kann an der Außenwand des Kontaktelements 1 quer zu dessen Achsrichtung zumindest ein Abscherelement 13 angeordnet sein, welches im Wesentlichen den Anpressdruck der Abreißschraube am zu verklemmenden bzw. zu kontaktierenden Leiter festlegt. Obwohl das zumindest eine Abscherelement 13 eine Vielzahl von Ausgestaltungen aufweisen kann, wird es vorzugsweise als kreisförmig umlaufender Abscherring an der Außenwand des Kontaktelements 1 zwischen dem ersten und zweiten Außengewinde 11 und 12 ausgebildet. Eine Dicke dᵣ des von der Außenwand hervorragenden Elements legt hierbei im Wesentlichen eine Abscherkraft für das Abscherelemente 13 bzw. den Abscherring fest, wodurch letztendlich ein Anpressdruck der Abreißschraube definiert werden kann.

Gemäß Figur 1 kann zwischen dem zumindest einen Abscherelement 13 und dem ersten Außengewinde 11 ferner eine Ringnut 14 in der Außenwand des Kontaktelements 1 ausgebildet sein, wodurch das Abscherverhalten ferner definiert beeinflusst werden kann und insbesondere eine saubere Abscherkante für das zumindest eine Abscherelement ermöglicht wird. Die Ringnut 14 kann hierbei z.B. einen Durchmesser aufweisen, der vorzugsweise kleiner als der Kerndurchmesser dᵢ des ersten Außengewindes 11 ist. Eine Berührung des Innengewindes 22 des Betätigungselements 2 mit dem zweiten Außengewinde 12 kann dadurch zuverlässig verhindert werden.

Zur weiteren Einstellung der Abschereigenschaften des Abscherelements 13 kann dieses ferner (nicht dargestellte) Einkerbungen oder eine durchgehende Vertiefung aufweisen, welche sich in Axialrichtung erstreckt und als Sollbruchstelle dient. Vorzugsweise kann diese (nicht dargestellte) Sollbruchstelle von der Seite des zweiten Außengewindes 12 in das zumindest eine Abscherelement 13 bzw. den Abscherring eingearbeitet sein.

Obwohl das zumindest eine Abscherelement 13 vorzugsweise als Abscherring ausgebildet ist, der an der Außenwand des Kontaktelements 1 hervorragt, kann das zumindest eine Abscherelement 13 auch durch lediglich eine Gewinde-Unterbrechung mit vordefiniertem Abstand zwischen dem ersten und zweiten Außengewinde 11 und 12 realisiert sein. Die Funktionsweise eines derartigen (nicht dargestellten) Abscherelements ist vergleichbar mit dem in Figur 1 dargestellten Abscherring, da auch hierbei das Betätigungselement 2 zunächst bis zum Ende des ersten Außengewindes aufschraubbar ist und dort zunächst blockiert wird, dadurch das Einschrauben des Kontaktelements 1 über sein zweites Außengewinde in den Klemmkörper bis zu einem vorbestimmten Anpressdruck ermöglicht wird, anschließend der gewindefreie Bereich durch Abscheren von Material des Kontaktelements 1 überwunden wird, wodurch sich schließlich das Betätigungselement 2 bis auf den Klemmkörper absenken kann und die Schraube unterhalb der Auflageebene abreissen kann.

Vorzugsweise kann das erste Außengewinde 11 einen Kerndurchmesser dᵢ aufweisen, der größer als der Nenndurchmesser dₐ des zweiten Außengewindes 12 ist. Bei einer derartigen Dimensionierung der Außengewinde 11 und 12 kann zuverlässig sichergestellt werden, dass die sich herabsenkende Mutter bzw. das Betätigungselement 2 sowie das Abscherelement 13 nach dem Abschervorgang sich nicht mit dem zweiten Außengewinde 12 verkanten, und ein Abreißen der Schraube bzw. des Kontaktelements 1 erst beim definierten Aufliegen des Abscherelements 13 bzw. des Betätigungselements 2 auf dem nicht dargestellten Klemmkörper erfolgt.

Ferner kann gemäß Figur 1 im Kontaktelement 1 ein Hohlraum 16 ausgebildet sein, wodurch die Abreißeigenschaften weiterhin festgelegt werden können. Beispielsweise kann der Hohlraum 16 durch eine Bohrung ausgebildet werden. Vorzugsweise wird der Hohlraum 16 durch eine so genannte Sacklochbohrung ausgebildet, wobei grundsätzlich auch Bohrungen möglich sind, welche durch die Schraubenkuppe 17 hindurchtreten (nicht dargestellt). Bei einer gleichmäßigen zylinderförmigen Bohrung kann in Kombination mit den unterschiedlichen Durchmessern des ersten Außengewindes 11 und des zweiten Außengewindes 12 eine hohe Tragfähigkeit im Bereich des ersten Außengewindes 11 erreicht werden, während eine definierte (geringe) Abreißkraft im Bereich des zweiten Außengewindes 12 eingestellt werden kann. Bei den in Figur 1 dargestellten Durchmessern für das erste Außengewinde 11 und das zweite Außengewinde 12, wobei ein Kerndurchmesser dᵢ des ersten Außengewindes 11 größer ist als der Nenndurchmesser dₐ des zweiten Außengewindes 12, ergibt sich bei einer gleichmäßigen Bohrung somit für das erste Außengewinde 11 eine größere Wanddicke als für das zweite Außengewinde 12, ohne dass hierbei weitere Bearbeitungsschritte für die Bohrung bzw. den Hohlraum 16 notwendig wären.

Das Kontaktelement 1 kann bei entsprechend kleinen Abmessungen aber auch als massives Bauteil ausgeführt sein, wobei die Abreißkräfte im Wesentlichen durch den Durchmesser des Kontaktelements 1 festgelegt werden. Beispielsweise kann als Material für das Kontaktelement 1 Kupfer oder Aluminium verwendet werden. In gleicher Weise können aber auch andere Materialien und insbesondere Legierungen mit einem Bestandteil von Kupfer oder Aluminium verwendet werden.

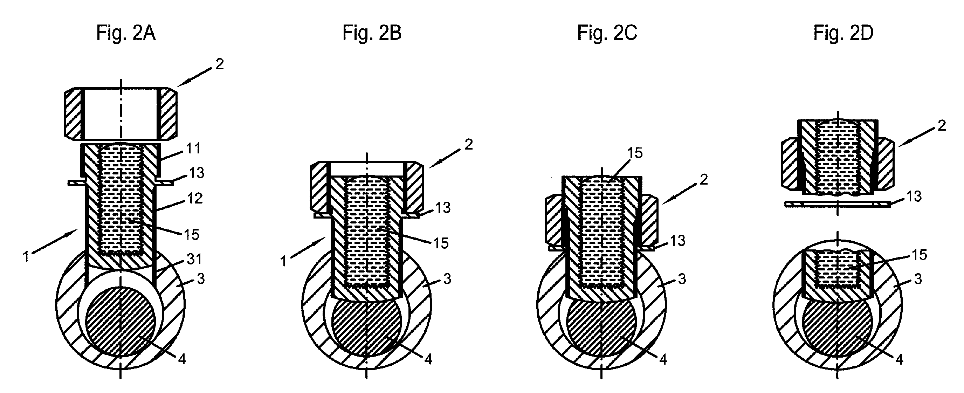

Die Figuren 2A bis 2D zeigen vereinfachte Schnittansichten einer Abreißschraube gemäß eines zweiten Ausführungsbeispiels in unterschiedlichen Positionen bei ihrer Betätigung auf einen Klemmkörper 3.

Gemäß Figur 2A kann der Hohlraum des Kontaktelements 1 mit einem Füllmaterial 15 aufgefüllt sein. Vorzugsweise ist eine Zugfestigkeit des Füllmaterials 15 um mindestens das Zehnfache kleiner als eine Zugfestigkeit des Materials für das Kontaktelement 1. Bei einer derartigen Materialauswahl kann sichergestellt werden, dass die Abreißkräfte im Wesentlichen von der Zugfestigkeit des Materials für das Kontaktelement 1 festgelegt werden und nicht nachteilig von der Zugfestigkeit des Füllmaterials 15 beeinflusst werden. Das Füllmaterial 15 kann beispielsweise ein Material aufweisen, welches zur Steuerung des elektrischen Feldes geeignet ist. Da beim Abreißen der Abreißschraube bzw. dem Kontaktelement 1 scharfe Kanten bzw. Spitzen und Ecken auftreten können, welche zu einer unerwünschten Erhöhung der elektrischen Feldstärke führen können, kann ein entsprechendes Füllmaterial 15 derartige negative Effekte positiv beeinflussen.

Zur Verbesserung einer Haftfähigkeit des Füllmaterials kann das Füllmaterial 15 mit einem nicht dargestellten Haftmittel wie beispielsweise einem Kleber im Hohlraum 16 kraftschlüssig angebracht sein. Alternativ oder zusätzlich kann durch gezieltes Erhöhen einer Rauheit der Oberfläche des Hohlraums 16 eine Haftung des Füllmaterials 15 im Hohlraum 16 durch Formschluss erhöht werden. Beispielsweise kann eine derartige Rauheit durch eine Innenrillung, ein Innengewinde oder eine Rändelung in der Sacklochbohrung realisiert werden. Eine Rautiefe R_{z} kann beispielsweise ≥0,2 mm sein.

Gemäß Figur 2A wird auf das derart mit einem Füllmaterial 15 aufgefüllte Kontaktelement 1 das Betätigungselement 2 in Form von z.B. einer standardisierten Schraubenmutter aufgeschraubt. Vorzugsweise kann die Abreißschraube bereits im vormontierten Zustand ausgeliefert werden, wobei das Betätigungselement 2 bis auf das zumindest eine Abscherelement 13 herabgeschraubt ist. Das Abscherelement 13 kann wiederum in Form eines Abscherrings oder einer Abscherscheibe zwischen dem ersten und zweiten Außengewinde 11 und 12 derart angeordnet sein, dass es im rechten Winkel zu seiner Achse verläuft und umlaufend fest mit der Wandung des Kontaktelements 1 verbunden ist. Beispielsweise kann das Abscherelement 13 vorzugsweise einstückig mit dem Kontaktelement 1 ausgeführt sein, wobei alternativ jedoch auch das zumindest eine Abscherelement 13 an der Außenwand des Kontaktelements 1 befestigt, beispielsweise aufgepresst, aufgeklebt oder angelötet, sein kann. In diesem Fall ergeben sich die Abscherkräfte im Wesentlichen aus der verwendeten Verbindung zwischen dem zumindest einen Abscherelement 13 und dem Kontaktelement 1.

Obwohl vorzugsweise eine ringförmige oder scheibenförmige Gestalt für das Abscherelement 13 verwendet wird, können selbstverständlich davon abweichende Formen für das zumindest eine Abscherelement 13 verwendet werden.

Gemäß Figur 2 wird das Kontaktelement 1 über sein zweites Außengewinde 12 in ein Innengewinde 31 des Klemmkörpers 3 eingeschraubt, in dem sich beispielsweise ein zu kontaktierendes Kabel bzw. zu verklemmender Leiter 4 befindet. Der Klemmkörper 3 kann beispielsweise eine zylinderförmige Hülse aus elektrisch leitendem Material darstellen, in den die Abreißschraube bzw. das Kontaktelement 1 eingeschraubt wird.

Gemäß Figur 2B wird das Betätigungselement 2 zunächst von dem zumindest einen Abscherelement 13 blockiert, wodurch das Kontaktelement 1 weiter in den Klemmkörper 3 eingeschraubt und der Leiter 4 dadurch verklemmt wird. Das Abscherelement 13 bestimmt hierbei den Anpressdruck auf den Leiter 4, wobei bei einem vorbestimmten Druck bzw. einer vorbestimmten Abscherkraft das zumindest eine Abscherelement 13 abschert und somit eine unerwünschte Quetschung des Leiters 4 zuverlässig verhindert wird.

Gemäß Figur 2C wird nunmehr das Betätigungselement 2 weiter auf dem ersten Außengewinde 11 aufgeschraubt, bis sich im Falle des als Abscherring ausgebildeten Abscherelements 13 dieser auf der Schulter des Klemmkörpers 3 abstützt und sich das Betätigungselement 2 wiederum auf dem Abscherring abstützt, um dadurch eine Abreißkraft auf die Wände des Kontaktelements 1 in Höhe der Schulter des Klemmkörpers 3 zu erzeugen. Bei Erreichen eines ausreichend hohen Drehmoments beim Betätigungselement 2 wird die Zugfestigkeit Rₘ des Materials des Kontaktelements 1 überschritten und die Abreißschraube reißt nach oben hin ab, wie in Figur 2D dargestellt ist.

Bei Verwendung eines Füllmaterials 15, welches eine gegenüber dem Kontaktelement 1 beispielsweise um das Zehnfache verringerte Zugfestigkeit aufweist, wird folglich auch das Füllmaterial 15 abgerissen, wodurch sich eine im Wesentlichen ebene Abreißkante ergibt, welche nicht aus dem Klemmkörper 3 herausragt oder Vertiefungen aufweist. Eine derartige Abreißschraube hat somit verbesserte elektrische Eigenschaften, da elektrische Feldstärkespitzen stark reduziert werden. Darüber hinaus sind auch die mechanischen Eigenschaften verbessert, da keine scharfen Kanten und vorstehenden Ecken aus dem Klemmkörper 3 herausragen, welche beispielsweise eine (nicht dargestellte) Isolierung beschädigen könnten. Der in der abgerissenen Schraube verbleibende Anteil des Füllmaterials 15 vereinheitlicht hierbei insbesondere die Abreißkanten der Abreißschraube.

Gemäß Figur 2D können der obere Teil der Abreißschraube mit dem Betätigungselement 2 sowie das als Abscherring ausgebildete Abscherelement 13 nunmehr entfernt werden. Erfindungsgemäß wird dadurch zum einen eine genau definierte Verklemmung bzw. Kontaktierung eines Leiters ermöglicht und andererseits eine saubere und exakt definierte Abrisskante realisiert.

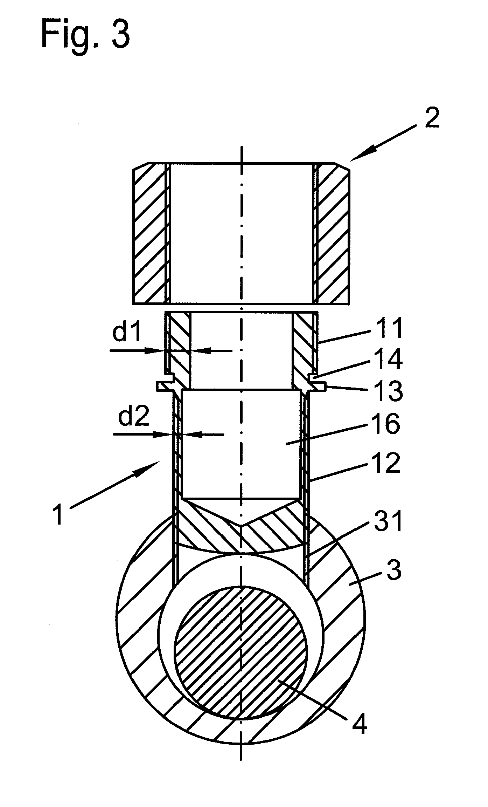

Figur 3 zeigt eine vereinfachte Schnittansicht einer Abreißschraube gemäß eines dritten Ausführungsbeispiels, wobei gleiche Bezugszeichen gleiche oder entsprechende Elemente wie in den Figuren 1 und 2 bezeichnen und daher nachfolgend auf eine wiederholte Beschreibung verzichtet wird.

Bei der Abreißschraube gemäß Figur 3 kann die Bohrung zur Realisierung des Hohlraums 16 im Wesentlichen flaschenförmig ausgebildet sein. Durch die flaschenförmige Ausgestaltung des Hohlraums 16 erhält man im Bereich des ersten Außengewindes 11 des Kontaktelements 1 (Flaschenhals) eine erste Wanddicke d1, welche größer ist als eine zweite Wanddicke d2 im Bereich des zweiten Außengewindes 12 des Kontaktelements 1. Durch eine derartige gezielte Einstellung der Wanddicken d1 und d2 können insbesondere die Abreißeigenschaften der Abreißschraube gezielt eingestellt werden, da insbesondere die zweite Wanddicke d2 direkt proportional zur Abrissfestigkeit der Abreißschraube ist. Wiederum kann auch eine derartige Abreißschraube mit einem nicht dargestellten Füllmaterial aufgefüllt sein, um die elektrischen und mechanischen Eigenschaften der Abreißschraube zu verbessern.

Der Übergang im Hohlraum 16 vom Flaschenhals zum Flaschenbauch kann gemäß Figur 3 rechtwinklig erfolgen. Alternativ kann dieser Übergang jedoch auch angeschrägt oder abgerundet sein. Vorzugsweise befindet sich der Übergang vom Flaschenhals zum Flaschenbauch im Bereich des Abscherelements 13 und kann insbesondere an der Unterkante des Abscherelements 13 ausgerichtet sein.

Die Erfindung wurde vorstehend anhand von bevorzugten Ausführungsbeispielen beschrieben. Sie ist jedoch nicht darauf beschränkt und umfasst insbesondere auch Kombinationen der vorstehend beschriebenen Ausführungsbeispiele.

Als Material der Abreißschraube wurden insbesondere Metalle bzw. Metall-Legierungen beschrieben. Die Erfindung ist jedoch nicht darauf beschränkt und umfasst in gleicher Weise auch Abreißschrauben aus nicht metallischen und insbesondere elektrisch nicht leitenden Materialien. Das Kontaktelement 1 kann vorzugsweise einstückig ausgebildet sein. In gleicher Weise kann das Kontaktelement jedoch auch aus mehreren Sub-Elementen bestehen, die ineinander gesteckt oder geschraubt sind.

### Bezugszeichenliste

- 1: Kontaktelement
- 2: Betätigungselement
- 3: Klemmkörper
- 4: Leiter
- 11: erstes Außengewinde
- 12: zweites Außengewinde
- 13: Abscherelement
- 14: Ringnut
- 15: Füllmaterial
- 16: Hohlraum
- 17: Schraubenkuppe
- 21: Werkzeugangriffsfläche
- 22: Innengewinde des Betätigungselements
- 31: Innengewinde des Klemmkörpers
- dᵣ: Dicke des Abscherelements
- dᵢ: Kerndurchmesser des ersten Außengewindes
- dₐ: Nenndurchmesser des zweiten Außengewindes
- d1: Wanddicke des ersten Außengewindes
- d2: Wanddicke des zweiten Außengewindes

## Patentansprüche

1. Abreißschraube mit
einem Kontaktelement (1) und
einem auf das Kontaktelement (1) aufschraubbaren Betätigungselement (2), wobei
das Kontaktelement (1) ein erstes Außengewinde (11) zum Aufschrauben des Betätigungselements (2),
ein zweites Außengewinde (12) zum Einschrauben in einen Klemmkörper (3), und
zumindest ein Abscherelement (13) aufweist, das zwischen dem ersten und zweiten Außengewinde (11, 12) quer zur Achsrichtung an der Außenwand des Kontaktelements (1) angeordnet ist.

2. Abreißschraube nach Patentanspruch 1, wobei das zumindest eine Abscherelement (13) einen kreisförmig umlaufenden Abscherring darstellt.

3. Abreißschraube nach Patentanspruch 1 oder 2, wobei zwischen dem zumindest einen Abscherelement (13) und dem ersten Außengewinde (11) eine Ringnut (14) in der Außenwand des Kontaktelements (1) angeordnet ist.

4. Abreißschraube nach einem der Patentansprüche 1 bis 3, wobei das erste Außengewinde (11) einen Kerndurchmesser (dᵢ) aufweist, der größer als der Nenndurchmesser (dₐ) des zweiten Außengewindes (12) ist.

5. Abreißschraube nach einem der Patentansprüche 1 bis 4, wobei das Betätigungselement (2) eine Werkzeugangriffsfläche (21) für ein Antriebswerkzeug aufweist.

6. Abreißschraube nach Patentanspruch 5, wobei das Betätigungselement (2) eine standardisierte Schraubenmutter darstellt.

7. Abreißschraube nach einem der Patentansprüche 1 bis 6, wobei das Kontaktelement (1) einen Hohlraum (16) aufweist.

8. Abreißschraube nach Patentanspruch 7, wobei der Hohlraum (16) durch eine Bohrung ausgebildet ist.

9. Abreißschraube nach Patentanspruch 7 oder 8, wobei das Kontaktelement (1) im Bereich des ersten Außengewindes (11) eine erste Wanddicke (d1) aufweist, die größer als eine zweite Wanddicke (d2) im Bereich des zweiten Außengewindes (12) ist.

10. Abreißschraube nach einem der Patentansprüche 7 bis 9, wobei der Hohlraum (16) eine Rauheit mit einer Rautiefe R_{z} ≥ 0,2 mm aufweist.

11. Abreißschraube nach einem der Patentansprüche 7 bis 10, wobei der Hohlraum (16) mit einem Füllmaterial (15) aufgefüllt ist, dessen Zugfestigkeit um mindestens das Zehnfache kleiner ist als eine Zugfestigkeit des Materials für das Kontaktelement (1).

12. Abreißschraube nach Patentanspruch 11, wobei das Füllmaterial (15) ein Material zur Steuerung des elektrischen Feldes aufweist.
